(19) Europäisches Patentamt
European Patent Office
Office européen des brevets

(11) EP 4 343 913 B1

(12) EUROPEAN PATENT SPECIFICATION

(45) Date of publication and mention of the grant of the patent:
**20.05.2026 Bulletin 2026/21**

(21) Application number: **22893198.6**

(22) Date of filing: **09.11.2022**

(51) International Patent Classification (IPC):
***H01M 10/0564*** *(2010.01)* ***H01M 10/0565*** *(2010.01)*
***H01M 10/052*** *(2010.01)* ***H01M 10/0525*** *(2010.01)*
***H01M 10/056*** *(2010.01)*

(52) Cooperative Patent Classification (CPC):
**H01M 10/0565; H01M 10/052; H01M 10/0525; H01M 10/056; H01M 10/0564;** H01M 2300/0025; H01M 2300/0082; H01M 2300/0085; H01M 2300/0088; Y02E 60/10

(86) International application number:
**PCT/KR2022/017564**

(87) International publication number:
**WO 2023/085778 (19.05.2023 Gazette 2023/20)**

(54) **SOLID-LIQUID HYBRID ELECTROLYTE MEMBRANE FOR LITHIUM SECONDARY BATTERY**
FEST-FLÜSSIG-HYBRID-ELEKTROLYTMEMBRAN FÜR LITHIUMSEKUNDÄRBATTERIE
MEMBRANE ÉLECTROLYTIQUE HYBRIDE SOLIDE-LIQUIDE POUR BATTERIE SECONDAIRE AU LITHIUM

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **12.11.2021 KR 20210155865**

(43) Date of publication of application:
**27.03.2024 Bulletin 2024/13**

(73) Proprietor: **LG Energy Solution, Ltd.**
**Seoul 07335 (KR)**

(72) Inventors:
- **LEE, Jung Pil**
  **Daejeon 34122 (KR)**
- **HAN, Hyeaeun**
  **Daejeon 34122 (KR)**
- **RYU, Jihoon**
  **Daejeon 34122 (KR)**
- **KIM, Dong Kyu**
  **Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
**CN-A- 106 450 447**
**KR-A- 20120 080 831**
**KR-A- 20150 101 235**
**KR-A- 20170 058 796**
**KR-B1- 101 028 970**
**US-A1- 2015 244 025**

- **LIU BO; HUANG YUN; CAO HAIJUN; ZHAO LEI; HUANG YIXUAN; SONG AMIN; LIN YUANHUA; LI XING; WANG MINGSHAN: "A novel porous gel polymer electrolyte based on poly(acrylonitrile-polyhedral oligomeric silsesquioxane) with high performances for lithium-ion batteries", JOURNAL OF MEMBRANE SCIENCE, ELSEVIER BV, NL, vol. 545, 1 January 1900 (1900-01-01), NL , pages 140 - 149, XP085215507, ISSN: 0376-7388, DOI: 10.1016/j.memsci.2017.09.077**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 343 913 B1

## Description

[Technical Field]

This application claims the benefit of priority based on Korean Patent Application No. 10-2021-0155865 filed on November 12, 2021.

The present invention relates to a solid phase-liquid phase hybrid electrolyte membrane for a lithium secondary battery.

[Background Art]

The importance of lithium secondary batteries is increasing with the increase in the use of vehicles, computers, and portable terminals. Among them, the development of a lithium secondary battery capable of generating high energy density with a light weight is particularly required. Such a lithium secondary battery consists of a liquid or solid electrolyte along with the separator interposed between the positive electrode and negative electrode.

Since the lithium-ion secondary battery using the liquid electrolyte has a structure in which the negative electrode and the positive electrode are separated by the separator, if the separator is damaged by deformation or external impact, a short circuit may occur, and thus there is a problem that leakage and volatilization occur, or risk of overheating or explosion occurs. Therefore, there is a need to improve the safety of the lithium-ion secondary battery to which the existing liquid electrolyte is applied.

In addition, an all-solid-state battery using the solid electrolyte has increased stability of the battery and can prevent leakage of the electrolyte solution, thereby improving the reliability of the battery. However, in the case of the solid electrolyte, the ion conductivity at room temperature is very low, and thus there is a problem that the performance of the battery is deteriorated. Therefore, even if a solid electrolyte is used, it is still necessary to develop a solid electrolyte membrane with high energy density and improved processability.

Therefore, it is necessary to secure technology for a lithium-ion secondary battery to which a solid phase-liquid phase hybrid electrolyte or a solid electrolyte are applied, without leakage of the electrolyte solution, instead of the existing liquid electrolyte for the transfer of ions.

[Prior Art Document]

[Patent Document]

(Patent Document 1) Korean Laid-open Patent Publication No. 2003-0097009(2003.12.31), "Polymer electrolyte with good leakage-resistance and lithium battery employing the same"

US 2015/244025 A1 discloses a solid polymer electrolyte composition including a polymer matrix, an organic solvent, and an additive agent containing polyhedral silsesquioxane, and also provides a lithium secondary battery including the same.

[Disclosure]

[Technical Problem]

In order to solve the above-mentioned technical problems, one aspect of the present invention is to provide a solid phase-liquid phase hybrid electrolyte membrane for a lithium secondary battery that does not leak or volatilize in an environment of normal pressure or high pressure, has excellent mechanical strength, and has high ion conductivity, and to provide a lithium secondary battery with improved performance by comprising the same.

Other objects and advantages of the present invention will be understood from the following description. Further, it will be readily apparent that the objects and advantages of the present invention may be realized by means or methods set forth in the claims and combinations thereof.

[Technical Solution]

The above problems are solved in accordance with the subject-matter of the independent claims. Further embodiments result from the sub-claims and the following description.

One aspect of the present invention provides a solid phase-liquid phase hybrid electrolyte membrane comprising a polymer; liquid phase polyhedral oligomeric silsesquioxane (POSS) represented by Formula 1 below; and a lithium salt, wherein the polymer is selected from the group consisting of polypropylene carbonate (PPC) and polyvinylpyrrolidone

(PVP) as a main chain or a side chain:

[Formula 1]

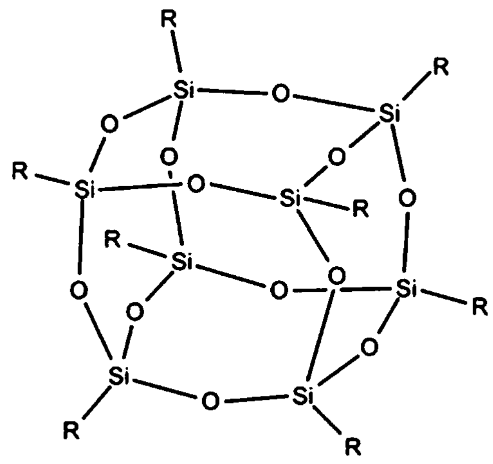

wherein,

R are the same as or different from each other, and are each independently selected from the group consisting of groups represented by Formulas 1-1 to 1-4:

[Formula 1-1]

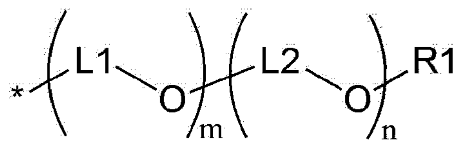

[Formula 1-2]

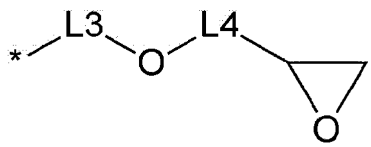

[Formula 1-3]

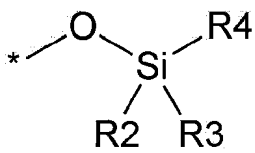

[Formula 1-4]

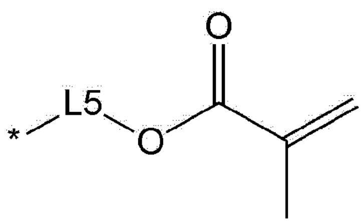

wherein,
L1 to L5 are a C1 to C30 alkylene group,
R1 to R4 are selected from the group consisting of hydrogen; a hydroxyl group; an amino group; a thiol group; a C1 to C30 alkyl group; a C2 to C30 alkenyl group; a C2 to C30 alkynyl group; a C1 to C30 alkoxy group; and a C1 to C30 carboxyl group,
m and n are the same as or different from each other, and are each independently an integer of 0 to 10, and
* is a binding position;
wherein the weight content ratio of the polymer and the liquid phase polyhedral oligomeric silsesquioxane is 1: 1 to 1: 4; and
the weight content ratio of the liquid phase polyhedral oligomeric silsesquioxane and the lithium salt is 10: 1 to 2:1.

In one embodiment of the present invention, in Formulas 1-1 to 1-4, L1 to L5 are a C1 to C10 alkylene group, R1 to R4 are hydrogen; hydroxyl group; or a C1 to C30 alkyl group, m and n are the same as or different from each other, and are each independently an integer of 0 to 10.
In one embodiment of the present invention, in Formula 1, R is selected from the group consisting of a polyethylene glycol group, a glycidyl group, an dimethyl siloxy group and a methacrylic group.
In one embodiment of the present invention, the lithium salt comprises at least one selected from the group consisting of $LiPF_6$, $LiBF_4$, $LiSbF_6$, $LiAsF_6$, LiOH, $LiOH{\cdot}H_2O$, LiBOB, $LiClO_4$, $LiN(C_2F_5SO_2)_2$, $LiN(CF_3SO_2)_2$, $CF_3SO_3Li$, $LiC(CF_3SO_2)_3$, $LiC_4BO_8$, LiFSI, $LiClO_4$ and combinations thereof.
In one embodiment of the present invention, the ion conductivity of the electrolyte membrane is $1.0 \times 10^{-7}$ to $9.0 \times 10^{-5}$ S/cm at 25°C.
In one embodiment of the present invention, the thickness of the electrolyte membrane is 1 to 200 μm.
Another aspect of the present invention provides a lithium secondary battery comprising a positive electrode; a negative electrode; and the solid phase-liquid phase hybrid electrolyte membrane according to the present invention.

[Advantageous Effects]

The solid phase-liquid phase hybrid electrolyte membrane for the lithium secondary battery according to one aspect of the present invention does not leak or volatilize even under normal pressure and pressure applied conditions, has high ion conductivity, and has excellent stability and mechanical strength.
In addition, the lithium secondary battery including the solid phase-liquid phase hybrid electrolyte membrane for the lithium secondary battery has excellent charging/discharging characteristics and lifetime characteristics.

[Description of Drawings]

FIG. 1 schematically shows the solid phase-liquid phase hybrid electrolyte membrane according to one aspect of the present invention.

[Best Mode]

Hereinafter, the present invention will be described in detail with reference to the accompanying drawings so that those skilled in the art can easily carry out the present invention. However, the present invention may be embodied in many different forms and is not limited thereto.
The terms and words used in the present specification and claims should not be construed as limited to ordinary or dictionary terms, and should be construed in a sense and concept consistent with the technical idea of the present invention, based on the principle that the inventor can properly define the concept of a term to describe his invention in the best way possible.
The terminology used herein is for the purpose of describing a particular embodiment only and is not intended to be limiting of the invention. The singular expressions comprise plural expressions unless the context clearly dictates otherwise. It is to be understood that the terms such as "comprise" or "have" as used in the present specification, are intended to designate the presence of stated features, numbers, steps, operations, components, parts or combinations thereof, but not to preclude the possibility of the presence or addition of one or more other features, numbers, steps, operations, components, parts, or combinations thereof.
The present invention relates to a solid phase-liquid phase hybrid electrolyte membrane, a manufacturing method thereof, and a lithium secondary battery comprising the same.
The solid phase-liquid phase hybrid electrolyte membrane according to one aspect of the present invention comprises a solid phase polymer and a liquid phase polyhedral oligomeric silsesquioxane (POSS). The solid phase-liquid phase hybrid electrolyte membrane contains a liquid phase and is in the form of a solid phase, and leakage and

volatilization do not occur under normal pressure and pressure applied conditions.

This solid phase-liquid phase hybrid electrolyte membrane contains a predetermined amount of liquid phase polyhedral oligomeric silsesquioxane in the solid phase polymer chain structure, wherein the liquid phase polyhedral oligomeric silsesquioxane may be impregnated into the solid phase polymer chain structure, or the liquid phase polyhedral oligomeric silsesquioxane may be coated on a portion where the solid phase polymers are in contact with each other, or on their surfaces.

The solid phase-liquid phase hybrid electrolyte membrane according to the present invention comprises a solid phase polymer having low ion conductivity, but it also comprises an appropriate amount of a liquid phase polyhedral oligomeric silsesquioxane, thereby securing improved ion conductivity compared to conventional solid electrolyte membranes and at the same time having free-standing mechanical strength.

FIG. 1 schematically shows the structure of the solid phase-liquid phase hybrid electrolyte membrane according to one aspect of the present invention. Hereinafter, the present invention will be described in more detail with reference to the drawings.

Referring to FIG. 1, the solid phase-liquid phase hybrid electrolyte membrane 10 according to one aspect of the present invention comprises a solid phase polymer 1 and a predetermined amount of a liquid phase polyhedral oligomeric silsesquioxane 2.

The solid phase polymer 1 is a solid at room temperature. Also, it is a polymeric material with low solubility in the electrolyte solution.

The liquid phase polyhedral oligomeric silsesquioxane 2 is a liquid at room temperature. When thermal curing is performed on the liquid phase polyhedral oligomeric silsesquioxane, its polymerization occurs and it can be converted into a solid. According to the present invention, the solid phase-liquid phase hybrid electrolyte membrane can be prepared by mixing a solid phase polymer and a liquid phase polyhedral oligomeric silsesquioxane in a specific ratio. A more specific description is as described below.

The solid phase-liquid phase hybrid electrolyte membrane according to one aspect of the present invention includes a polymer; liquid phase polyhedral oligomeric silsesquioxane (POSS) represented by Formula 1 below; and a lithium salt:

[Formula 1]

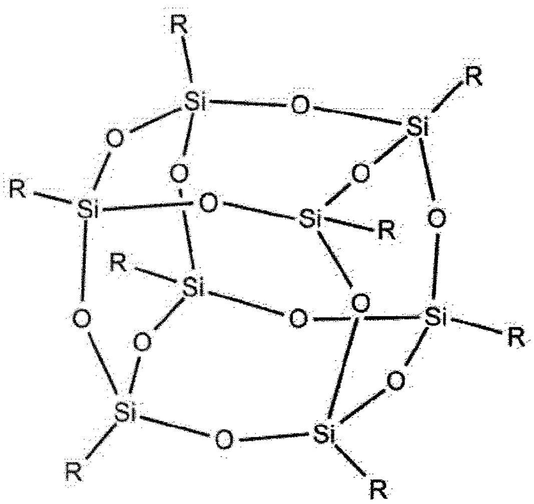

wherein,

R are the same as or different from each other, and are each independently selected from the group consisting of groups represented by Formulas 1-1 to 1-4:

[Formula 1-1]

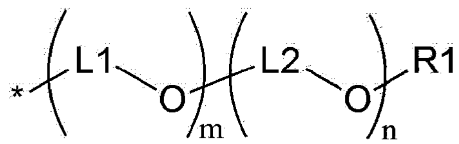

[Formula 1-2]

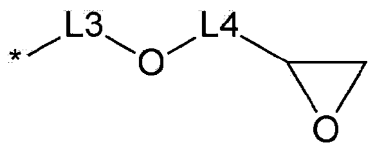

[Formula 1-3]

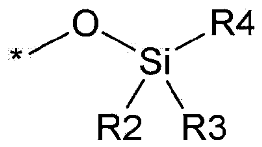

[Formula 1-4]

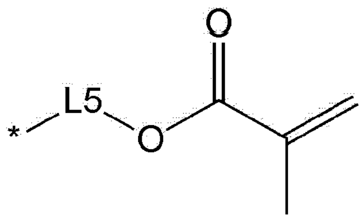

wherein,
L1 to L5 are a C1 to C30 alkylene group,
R1 to R4 are selected from the group consisting of hydrogen; a hydroxyl group; an amino group; a thiol group; a C1 to C30 alkyl group; a C2 to C30 alkenyl group; a C2 to C30 alkynyl group; a C1 to C30 alkoxy group; and a C1 to C30 carboxyl group,
m and n are the same as or different from each other, and are each independently an integer of 0 to 10,
* is a binding position
wherein the weight content ratio of the polymer and the liquid phase polyhedral oligomeric silsesquioxane is 1: 1 to 1: 4; and
the weight content ratio of the liquid phase polyhedral oligomeric silsesquioxane and the lithium salt is 10: 1 to 2:1.

The polyhedral oligomeric silsesquioxane (POSS) has various structures such as random structures, ladder structures, cage structures, and partial cage structures. Among them, the polyhedral oligomeric silsesquioxane comprised in the solid phase-liquid phase hybrid electrolyte membrane according to the present invention has a silica cage structure with a diameter of about 1 to 5 nm depending on the size of the cage, and is an organic-inorganic complex with properties of both silica ($SiO_2$) which is an inorganic substance, and silicone ($R_2SiO$) which is an organic substance. The polyhedral oligomeric silsesquioxane can increase mechanical properties and mechanical strength by reducing the empty space of the electrolyte to form a more robust and dense structure.

The inventors of the present invention found that the ion conductivity could be improved by mixing a solid phase polymer having low ion conductivity with a liquid phase polyhedral oligomeric silsesquioxane represented by Formula 1 below. By mixing the solid phase polymer and the liquid phase polyhedral oligomeric silsesquioxane of the present invention, since the polyhedral oligomeric silsesquioxane is positioned between the polymer chains, the movement of the polymer chains is facilitated, and thus lithium ions are also easily moved, the ion conductivity is improved. The liquid phase polyhedral oligomeric silsesquioxane represented by Formula 1 is as follows:

[Formula 1]

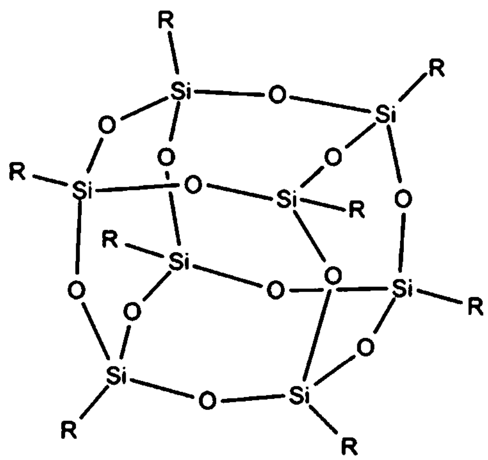

wherein,

R are the same as or different from each other, and are each independently selected from the group consisting of groups represented by Formulas 1-1 to 1-4:

[Formula 1-1]

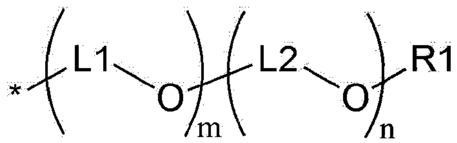

[Formula 1-2]

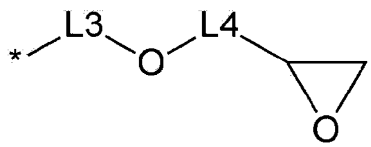

[Formula 1-3]

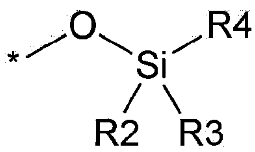

[Formula 1-4]

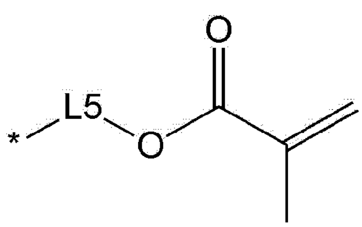

wherein,
L1 to L5 are a C1 to C30 alkylene group;

R1 to R4 are selected from the group consisting of hydrogen; a hydroxyl group; an amino group; a thiol group; a C1 to C30 alkyl group; a C2 to C30 alkenyl group; a C2 to C30 alkynyl group; a C1 to C30 alkoxy group; and a C1 to C30 carboxyl group,

m and n are the same as or different from each other, and are each independently an integer of 0 to 10, and

* is a binding position.

In Formula 1, R may have one or more functional groups capable of bonding with lithium ions.

In one embodiment of the present invention, R may be a group represented by Formula 1-1. In Formula 1-1, L1 and L2 may be a C1 to C30 alkylene group, preferably a C1 to C20 alkylene group, and more preferably a C1 to C10 alkylene group. In Formula 1-1, R1 may be hydrogen, a C1 to C30 alkyl group, a C2 to C30 alkenyl group, a C2 to C30 alkynyl group, a C1 to C30 alkoxy group, or a C1 to C30 carboxyl group, preferably a C1 to C20 alkyl group, a C2 to C20 alkenyl group, a C2 to C20 alkynyl group, a C1 to C20 alkoxy group or a C1 to C20 carboxyl group, and more preferably a C1 to C10 alkyl group, a C2 to C10 alkenyl group, a C2 to C10 alkynyl group, a C1 to C10 alkoxy group, or a C1 to C10 carboxyl group.

In another embodiment of the present invention, R may be a group represented by Formula 1-2. In Formula 1-2, L3 and L4 may be a C1 to C30 alkylene group, preferably a C1 to C20 alkylene group, and more preferably a C1 to C10 alkylene group.

In another embodiment of the present invention, R may be a group represented by Formula 1-3. In Formula 1-3, R2 to R4 are the same as or different from each other, and each independently may be hydrogen, a hydroxyl group, a C1 to C30 alkyl group, a C2 to C30 alkenyl group, a C2 to C30 alkynyl group, or a C1 to C30 alkoxy group, preferably hydrogen, a hydroxyl group, a C1 to C20 alkyl group, a C2 to C20 alkenyl group, a C2 to C20 alkynyl group or a C1 to C20 alkoxy group, and more preferably, hydrogen, a hydroxyl group, a C1 to C10 alkyl group, a C2 to C10 alkenyl group, a C2 to C10 alkynyl group, or a C1 to C10 alkoxy group.

In another embodiment of the present invention, R may be a group represented by Formula 1-4. In Formula 1-4, L5 may be a C1 to C30 alkylene group, preferably a C1 to C20 alkylene group, and more preferably a C1 to C10 alkylene group.

For example, in Formula 1, R may be selected from the group consisting of a polyethylene glycol group, a glycidyl group, an dimethyl siloxy group, and a methacryl group, R may be

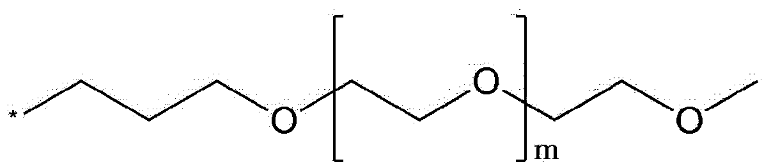

(wherein, m is an integer from 1 to 9),

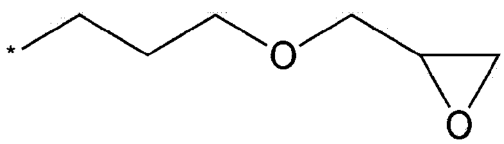 , 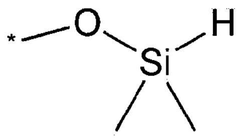 ,

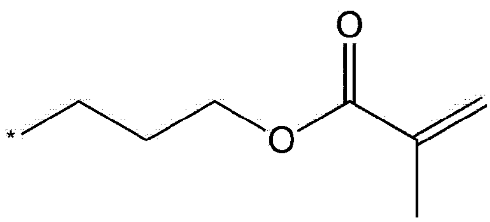

(wherein * is a binding position), but is not limited thereto.

In one embodiment of the present invention, the polymer may be a polymer in which phase separation does not occur when mixed with the liquid phase polyhedral oligomeric silsesquioxane. The polymer may be a solid phase polymer that is compatible with the liquid phase polyhedral oligomeric silsesquioxane by mixing it in an appropriate ratio, that is, has compatibility with liquid POSS.

Specifically, the polymer is selected from the group consisting of polypropylene carbonate (PPC) and polyvinylpyrrolidone (PVP) as a main chain or a side chain.

In the present invention, the solid phase-liquid phase hybrid electrolyte membrane comprising the polymer and the liquid phase polyhedral oligomeric silsesquioxane represented by Formula 1 comprises a lithium salt.

The lithium salt may act as a source of lithium ions in the battery to enable basic operation of the lithium secondary battery and may serve to promote movement of lithium ions between the positive electrode and the negative electrode. The lithium salt may be one selected from the group consisting of $LiPF_6$, $LiBF_4$, $LiSbF_6$, $LiAsF_6$, LiOH, $LiOH \cdot H_2O$, LiBOB, $LiClO_4$, $LiN(C_2F_5SO_2)_2$, $LiN(CF_3SO_2)_2$, $CF_3SO_3Li$, $LiC(CF_3SO_2)_3$, $LiC_4BO_8$, LiFSI, $LiClO_4$ and combinations thereof, but is not limited thereto.

The content of the lithium salt may be 10 to 50 parts by weight, preferably 15 to 45 parts by weight, and more preferably 20 to 40 parts by weight based on a total of 100 parts by weight of the electrolyte membrane. If the content of the lithium salt is less than 10 parts by weight, since the content is low, the ionic conductivity of the electrolyte membrane may be lowered. If the content is more than 50 parts by weight, since all lithium salts are not dissociated in the electrolyte membrane and exist in a crystalline state, they do not contribute to the ion conductivity, but rather act as a hindrance to the ion conductivity, and thus the ion conductivity can be reduced, and since the content of the polymer is relatively reduced, the mechanical strength of the solid phase-liquid phase hybrid electrolyte membrane may be weakened. Therefore, the content of the lithium salt is appropriately adjusted within the above range.

The content ratio of the polymer and the liquid phase polyhedral oligomeric silsesquioxane is 1: 1 to 1: 4. If the content ratio of the polymer and the liquid phase polyhedral oligomeric silsesquioxane exceeds 1: 1 to 1: 8, there is a problem in that leakage occurs because they do not exist in the solid phase.

The content ratio of the liquid phase polyhedral oligomeric silsesquioxane and the lithium salt is 10: 1 to 2: 1. If the content ratio of the liquid phase polyhedral oligomeric silsesquioxane and the lithium salt is less than 10: 1 to 1: 2, since the amount of lithium ions is small, the ion conductivity is reduced. If the content ratio exceeds 10: 1 to 1: 2, since the lithium ions are excessive, they are not dissociated but are precipitated, or since the viscosity is increased, the ion conductivity is reduced.

In one embodiment of the present invention, the ion conductivity of the solid phase-liquid phase hybrid electrolyte membrane may be $1.0 \times 10^{-7}$ to $9.0 \times 10^{-5}$ S/cm, preferably $1.1 \times 10^{-7}$ to $8.9 \times 10^{-7}$ S/cm.

In one embodiment of the present invention, the electrical resistivity of the solid phase-liquid phase hybrid electrolyte membrane may be 10.0 to 60,000 ohm ($\Omega$), preferably 50.0 to 55,000 ohm ($\Omega$).

In the solid phase-liquid phase hybrid electrolyte membrane, as the content of liquid phase polyhedral oligomeric silsesquioxane relative to the polymer is increased, the electrical resistivity of the electrolyte membrane can be increased and the ion conductivity of the electrolyte membrane can be increased.

In one embodiment of the present invention, the solid phase-liquid phase hybrid electrolyte membrane may have a thickness of 1 to 200 $\mu$m, and preferably 5 to 195 $\mu$m. If the thickness of the solid phase-liquid phase hybrid electrolyte membrane is less than 1 $\mu$m, the mechanical strength of the electrolyte membrane is weak, and thus there may be difficulties in assembling the battery or an electrical short circuit may occur. In addition, if the thickness of the solid phase-liquid phase hybrid electrolyte membrane exceeds 200 $\mu$m, the energy density and the ion conductivity are lowered, thereby making it difficult to apply to a battery.

In one embodiment of the present invention, the present invention provides a lithium secondary battery comprising a positive electrode, a negative electrode, and a separator interposed between the positive electrode and the negative electrode, wherein the separator may include a solid phase-liquid phase hybrid electrolyte membrane according to the present invention.

The positive electrode and the negative electrode have a current collector and an electrode active material layer formed on at least one surface of the current collector, and the active material layer includes a plurality of electrode active material particles and a solid electrolyte. In addition, the electrode may further comprise at least one of an electrically conductive material and a binder resin, if necessary. In addition, the electrode may further include various additives for the purpose of supplementing or improving the physicochemical properties of the electrode.

In the present invention, any negative electrode active material may be used as long as it is usable as a negative electrode active material for a lithium-ion secondary battery. For example, the negative electrode active material may be one or two or more species selected from carbon such as non-graphitizable carbon and graphite-based carbon; metal composite oxides such as $Li_xFe_2O_3(0 \leq x \leq 1)$, $Li_xWO_2(0 \leq x \leq 1)$, $Sn_xMe_{1-x}Me'_yO_z$(Me is Mn, Fe, Pb and Ge; Me' is Al, B, P, Si, elements of groups 1, 2, and 3 of the periodic table, halogen; $0<x \leq 1$; $1 \leq y \leq 3$; $1 \leq z \leq 8$); lithium metal; lithium alloy; silicon-based alloy; tin-based alloy; metal oxide such as SnO, $SnO_2$, PbO, $PbO_2$, $Pb_2O_3$, $Pb_3O_4$, $Sb_2O_3$, $Sb_2O_4$, $Sb_2O_5$, GeO, $GeO_2$, $Bi_2O_3$, $Bi_2O_4$, and $Bi_2O_5$; an electrical conductivity polymer such as polyacetylene; Li-Co-Ni based material; titanium oxide; lithium titanium oxide. In one specific embodiment, the negative electrode active material may comprise a carbonaceous material and/or Si.

In the case of the positive electrode, the electrode active material is not particularly limited as long as it can be used as a positive electrode active material for a lithium-ion secondary battery. For example, the positive electrode active material may be layered compounds such as lithium cobalt oxide ($LiCoO_2$) and lithium nickel oxide ($LiNiO_2$) or compounds substituted with one or more transition metals; lithium manganese oxides such as formula $Li_{1+x}Mn_{2-x}O_4$(wherein, x is 0 ~

0.33), $LiMnO_3$, $LiMn_2O_3$, and $LiMnO_2$; lithium copper oxide ($Li_2CuO_2$); vanadium oxides such as $LiV_3O_8$, $LiFe_3O_4$, $V_2O_5$, and $Cu_2V_2O_7$; Ni site type lithium nickel oxide represented by formula $LiNi_{1-x}M_xO_2$(wherein, M = Co, Mn, Al, Cu, Fe, Mg, B or Ga, and x = 0.01 ~ 0.3); lithium manganese composite oxide represented by formula $LiMn_{2-x}M_xO_2$(wherein, M = Co, Ni, Fe, Cr, Zn or Ta, and x =0.01 ~ 0.1) or $Li_2Mn_3MO_8$(wherein, M = Fe, Co, Ni, Cu or Zn); lithium manganese composite oxide with spinel structure represented by formula $LiNi_xMn_{2-x}O_4$; $LiMn_2O_4$ in which part of Li in the formula is substituted with alkaline earth metal ions; a disulfide compound; $Fe_2(MoO_4)_3$. However, the positive electrode active material is not limited only to these.

In the present invention, the current collector is one that exhibits electrical conductivity, such as a metal plate, and an appropriate one may be used depending on the polarity of a current collector electrode known in the field of a secondary battery.

In the present invention, the electrically conductive material is for imparting conductivity to the electrode, and is typically added in an amount of 1 to 30% by weight based on the total weight of the mixture comprising the electrode active material. The electrically conductive material is not particularly limited as long as it has conductivity without causing chemical change in the battery, and for example, may comprise one selected from graphite such as natural graphite or artificial graphite; carbonaceous materials such as carbon black, acetylene black, Ketjen black, channel black, furnace black, lamp black, and thermal black; electrically conductive fibers such as carbon fibers and metal fibers; carbon fluoride; metal powders such as aluminum powder and nickel powder; electrically conductive whiskers such as zinc oxide and potassium titanate; electrically conductive metal oxides such as titanium oxide; electrically conductive materials such as polyphenylene derivatives, or a mixture of two or more thereof.

In the present invention, the binder resin serves to well attach the negative electrode active material particles to each other and to well attach the negative electrode active material to the current collector, and is not particularly limited as long as it is a component that assists in the binding of the active material and the electrically conductive material and the binding to the current collector, and for example may be polyvinylidene fluoride polyvinyl alcohol, carboxymethylcellulose (CMC), starch, hydroxypropyl cellulose, regenerated cellulose, polyvinylpyrrolidone, tetrafluoroethylene, polyethylene, polypropylene, ethylenepropylene-diene monomer (EPDM), sulfonated EPDM, styrene-butylene rubber, fluorine rubber, or various copolymers etc. The binder resin may be typically included in an amount ranging from 1 to 30% by weight, or 1 to 10% by weight based on 100% by weight of the electrode layer.

Meanwhile, in the present invention, the electrode active material layer may comprise one or more additives such as an oxidation stabilization additive, a reduction stabilization additive, a flame retardant, a heat stabilizer, and an antifogging agent, if necessary.

Hereinafter, the present invention will be described in more detail through examples, but the following examples are intended to illustrate the present invention, and the scope of the present invention is not limited to these only.

## Examples

### [Example 1] (Comparative)

10 wt.% of polyvinylidene fluoride (PVDF) (Sigma-Aldrich) as a polymer was added to N-methyl-2-pyrrolidone (NMP), and sufficiently stirred at 60 °C to prepare solution A.

Polyethylene glycol-polyhedral oligomeric silsesquioxane (PEG-POSS) (Hybridplastics) and lithium bis(trifluoromethanesulfonyl)imide (LiTFSI) (Sigma-Aldrich) were sufficiently stirred at 60 °C in a weight ratio of 10: 4 to prepare solution B.

The solutions A and B were sufficiently stirred at room temperature for 24 hours so that the content ratio of PVDF:PEG-POSS-LiTFSI was 1:2.

The prepared solution was coated on Stainless Steel Foil (SUS foil) with a doctor blade, and then vacuum dried at 100 °C for 12 hours to prepare a solid electrolyte membrane.

### [Example 2] (Comparative)

A solid electrolyte membrane was manufactured in the same manner as in Example 1 above, except that the content ratio of PVDF: PEG-POSS-LiTFSI is 1:3.

### [Example 3] (Comparative)

A solid electrolyte membrane was manufactured in the same manner as in Example 1 above, except that the content ratio of PVDF: PEG-POSS-LiTFSI is 1:4.

**[Example 4]**

A solid electrolyte membrane was manufactured in the same manner as in Example 1 above, except that in Example 1 above, polypropylene carbonate (PPC) is used instead of PVDF.

**[Example 5] (Comparative)**

A solid electrolyte membrane was manufactured in the same manner as in Example 1 above, except that in Example 1 above, polyacrylonitrile (PAN) is used instead of PVDF and the content ratio of PAN: PEG-POSS-LiTFSI is 1:1.

**[Example 6] (Comparative)**

A solid electrolyte membrane was manufactured in the same manner as in Example 1 above, except that in Example 1 above, polyacrylonitrile (PAN) is used instead of PVDF and the content ratio of PAN: PEG-POSS-LiTFSI is 1:2.

**[Example 7]**

A solid electrolyte membrane was manufactured in the same manner as in Example 1 above, except that in Example 1 above, polyvinylpyrrolidone (PVP) is used instead of PVDF and the content ratio of PVP: PEG-POSS-LiTFSI is 1:1.

**[Example 8]**

A solid electrolyte membrane was manufactured in the same manner as in Example 1 above, except that in Example 1 above, polyvinylpyrrolidone (PVP) is used instead of PVDF.

**[Example 9] (Comparative)**

A solid electrolyte membrane was manufactured in the same manner as in Example 2 above, except that in Example 2 above, Glycidyl-POSS-LiTFSI is used instead of PEG-POSS-LiTFSI.

**[Example 10] (Comparative)**

A solid electrolyte membrane was manufactured in the same manner as in Example 2 above, except that in Example 2 above, Dimethyl siloxy-POSS-LiTFSI is used instead of PEG-POSS-LiTFSI.

**[Comparative Example 1]**

10 wt.% of polyvinylidene fluoride (PVDF) (Sigma-Aldrich) as a polymer was added to N-methyl-2-pyrrolidone (NMP), and sufficiently stirred at 60 °C to prepare a solution.
The solution was sufficiently stirred at room temperature for 24 hours so that the content ratio of PVDF: LiTFSI was 10:2.
The prepared solution was coated on Stainless Steel Foil (SUS foil) with a doctor blade, and then vacuum dried at 100 °C for 12 hours to prepare a solid electrolyte membrane.

**[Comparative Example 2]**

A solid electrolyte membrane was manufactured in the same manner as in Comparative Example 1 above, except that in Comparative Example 1 above, polypropylene carbonate (PPC) is used instead of PVDF, and the content ratio of PPC: LiTFSI is 10:3.

**[Comparative Example 3]**

A solid electrolyte membrane was manufactured in the same manner as in Comparative Example 1 above, except that in Comparative Example 1 above, PAN is used instead of PVDF, and the content ratio of PAN: LiTFSI is 10:5.

**[Comparative Example 4]**

A solid electrolyte membrane was manufactured in the same manner as in Comparative Example 1 above, except that in Comparative Example 1 above, polyvinylpyrrolidone (PVP) is used instead of PVDF.

**[Comparative Example 5]**

A solid electrolyte membrane was manufactured in the same manner as in Comparative Example 1 above, except that in Comparative Example 1 above, PEG-POSS-LiTFSI is used instead of LiTFSI, and the content ratio of PVDF: PEG-POSS-LiTFSI is 1:6.

**Experimental Example 1: Ion conductivity of solid phase-liquid phase hybrid electrolyte membrane at atmospheric pressure**

Using VMP3 (Bio logic science instrument) which is an analysis device, the electrochemical impedance was measured under conditions of an amplitude of 10 mV and a scan range of 500 KHz to 20 MHz at 23°C, and based on this, the ion conductivity was calculated using Equation 1 below.

[Equation 1]

$$\sigma = \frac{l}{Ra}$$

wherein, σ is the ion conductivity, l is the film thickness, R is the resistance, and a is the area.

The ion conductivity obtained using Equation 1 is shown in Table 1 below.

Table 1:

| | **Sample** | Thickness **(μm)** | Resistance **(ohm)** | **Ion conductivity (S/cm)** |
|---|---|---|---|---|
| **Example 1** | PVDF: PEG-POSS-LiTFSI = 1:2 | 5 | 264.0 | 9. 42 . E-07 |
| **Example 2** | PVDF: PEG-POSS-LiTFSI = 1:3 | 33 | 165.0 | 9.95.E-06 |
| **Example 3** | PVDF: PEG-POSS-LiTFSI = 1:4 | 96 | 54.0 | 8.85.E-05 |
| **Example 4** | PPC: PEG-POSS-LiTFSI = 1:2 | 70 | 350.0 | 9.95.E-06 |
| **Example 5** | PAN: PEG-POSS-LiTFSI = 1:1 | 147 | 38,000.0 | 1.92.E-07 |
| **Example 6** | PAN: PEG-POSS-LiTFSI = 1:2 | 170 | 13,000.0 | 6.51.E-07 |
| **Example 7** | PVP: PEG-POSS-LiTFSI = 1:1 | 120 | 50,000.0 | 1.14.E-07 |
| **Example 8** | PVP: PEG-POSS-LiTFSI = 1:2 | 70 | 9,000.0 | 3.88.E-07 |
| **Example 9** | PVDF: Glycidyl-POSS-LiTFSI = 1:3 | 25 | 755.0 | 1.65.E-06 |
| **Example 10** | PVDF: Dimethyl siloxy-POSS-LiTFSI = 1:3 | 28 | 723.0 | 1.93.E-06 |
| **Comparative Example 1** | PVDF: LiTFSI = 10:2 | 18 | - | - |
| **Comparative Example 2** | PPC: LiTFSI = 10:3 | 30 | 130,000.0 | 1.15.E-08 |
| **Comparative Example 3** | PAN: LiTFSI = 10:5 | 72 | 100,000.0 | 3.58.E-08 |
| **Comparative Example 4** | PVP: LiTFSI = 10:2 | 18 | - | - |

(continued)

| | Sample | Thickness (μm) | Resistance (ohm) | Ion conductivity (S/cm) |
|---|---|---|---|---|
| **Comparative Example 5** | PVDF: PEG-POSS-LiTFSI = 1:6 | - | - | - |

In Table 1, according to the present invention, it was confirmed that the ion conductivity of an electrolyte membrane containing a polymer and POSS and containing a specific content ratio of the polymer and POSS is improved. On the other hand, it was found that in the case of an electrolyte membrane that does not contain the polymer with low ion conductivity and POSS, the ion conductivity was low.

**Experimental Example 2: Weight change at high pressure of solid phase-liquid phase hybrid electrolyte membrane**

In order to evaluate the leakage characteristics of the electrolyte membrane, the prepared electrolyte membrane was punched out with a diameter of 1.9 cm, and the separator was interposed on one side thereof, and then put between jigs and pressed at a pressure of 1 MPa for 1 minute, and the weight before and after pressurization was measured and the weight change was calculated using Equation 2 below.

Amount of weight change (%) = {(weight before pressurization- weight after pressurization)/weight before pressurization} * 100 [Equation 2]

The amount of weight change is shown in Table 2 below.

Table 2:

| | Amount of weight change **(%)** |
|---|---|
| **Example 1** | not measured |
| **Example 2** | 0.1 |
| **Example 3** | 0.2 |
| **Example 4** | 0 |
| **Example 5** | not measured |
| **Example 6** | 0.1 |
| **Example 7** | not measured |
| **Example 8** | 0 |
| **Example 9** | 0.1 |
| **Example 10** | 0.1 |
| **Comparative Example 1** | 0.1 |
| **Comparative Example 2** | not measured |
| **Comparative Example 3** | not measured |
| **Comparative Example 4** | not measured |
| **Comparative Example 5** | 5.2 |

In Table 2 above, it was confirmed that the solid phase-liquid phase hybrid electrolyte membrane according to the present invention has a weight change of 0.2% or less, and the leakage of the electrolyte membrane hardly occurs. On the other hand, it was confirmed that in Comparative Example 5, when an excessive amount of POSS was included, the weight change of the electrolyte membrane was greatly changed to 5.2%, and it did not have the form of a solid phase electrolyte membrane, and the leakage of the electrolyte membrane occurred when pressure was applied.

[Description of Symbol]

10: Solid phase-liquid phase hybrid electrolyte membrane
1: Solid phase polymer
2: Liquid phase polyhedral oligomeric silsesquioxane

## Claims

1. A solid phase-liquid phase hybrid electrolyte membrane, comprising a polymer; liquid phase polyhedral oligomeric silsesquioxane (POSS) represented by Formula 1 below; and a lithium salt,
wherein the polymer is selected from the group consisting of polypropylene carbonate (PPC) and polyvinylpyrrolidone (PVP) as a main chain or a side chain:

[Formula 1]

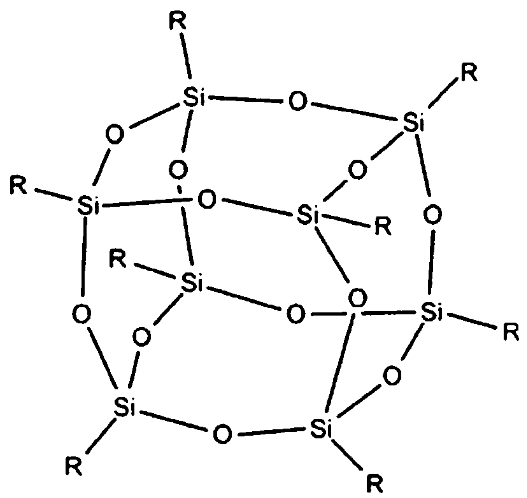

wherein,

R are the same as or different from each other, and are each independently selected from the group consisting of groups represented by Formulas 1-1 to 1-4:

[Formula 1-1]

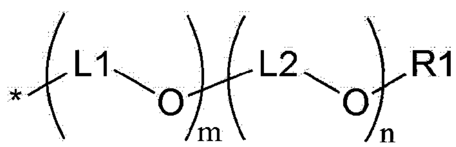

[Formula 1-2]

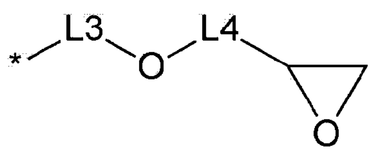

[Formula 1-3]

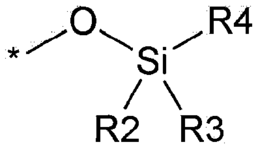

[Formula 1-4]

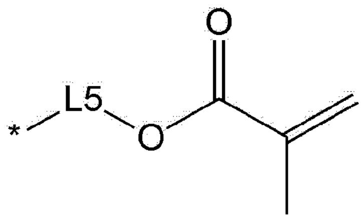

wherein,
L1 to L5 are a C1 to C30 alkylene group,
R1 to R4 are selected from the group consisting of hydrogen; a hydroxyl group; an amino group; a thiol group; a C1 to C30 alkyl group; a C2 to C30 alkenyl group; a C2 to C30 alkynyl group; a C1 to C30 alkoxy group; and a C1 to C30 carboxyl group,
m and n are the same as or different from each other, and are each independently an integer of 0 to 10, and
* is a binding position;
wherein the weight content ratio of the polymer and the liquid phase polyhedral oligomeric silsesquioxane is 1: 1 to 1: 4; and
the weight content ratio of the liquid phase polyhedral oligomeric silsesquioxane and the lithium salt is 10: 1 to 2:1.

**2.** The solid phase-liquid phase hybrid electrolyte membrane according to claim 1, wherein in Formula 1-1 to 1-4,

L1 to L5 are a C1 to C10 alkylene group,
R1 to R4 are hydrogen; hydroxyl group; or a C1 to C30 alkyl group, and
m and n are the same as or different from each other, and are each independently an integer of 0 to 10.

**3.** The solid phase-liquid phase hybrid electrolyte membrane according to claim 1, wherein R is selected from the group consisting of a polyethylene glycol group, a glycidyl group, a dimethyl silyloxy group and a methacrylic group.

**4.** The solid phase-liquid phase hybrid electrolyte membrane according to claim 1, wherein the lithium salt comprises at least one selected from the group consisting of $LiPF_6$, $LiBF_4$, $LiSbF_6$, $LiAsF_6$, LiOH, $LiOH \cdot H_2O$, LiBOB, $LiClO_4$, $LiN(C_2F_5SO_2)_2$, $LiN(CF_3SO_2)_2$, $CF_3SO_3Li$, $LiC(CF_3SO_2)_3$, $LiC_4BO_8$, LiFSI, $LiClO_4$ and a combination thereof.

**5.** The solid phase-liquid phase hybrid electrolyte membrane according to claim 1, wherein the ion conductivity of the solid phase-liquid phase hybrid electrolyte membrane is $1.0 \times 10^{-7}$ to $9.0 \times 10^{-5}$ S/cm at 25°C measured as set forth in the description.

**6.** The solid phase-liquid phase hybrid electrolyte membrane according to claim 1, wherein a thickness of the solid phase-liquid phase hybrid electrolyte membrane is 1 to 200 μm.

**7.** A lithium secondary battery comprising a positive electrode; a negative electrode; and the solid phase-liquid phase hybrid electrolyte membrane according to any one of claims 1 to 6.

## Patentansprüche

**1.** Festphasen-Flüssigphasen-Hybridelektrolytmembran, umfassend ein Polymer; polyedrisches oligomeres Flüssigphasen-Silsesquioxan (POSS), dargestellt durch Formel 1 unten; und ein Lithiumsalz,
wobei das Polymer ausgewählt ist aus der Gruppe, bestehend aus Polypropylencarbonat (PPC) und Polyvinylpyrrolidon (PVP) als eine Hauptkette oder eine Seitenkette:

[Formel 1]

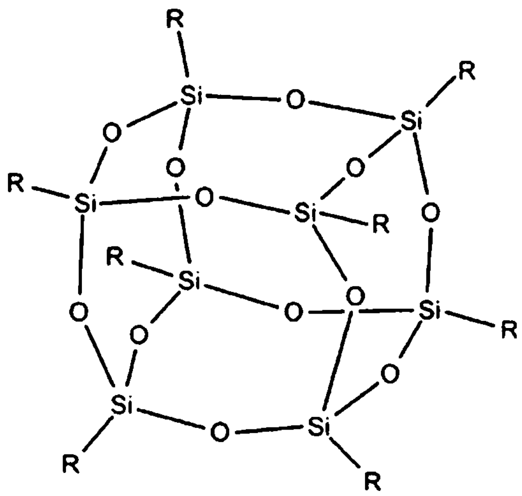

wobei

R gleich oder verschieden voneinander sind und jeweils unabhängig ausgewählt sind aus der Gruppe, bestehend aus Gruppen, dargestellt durch Formeln 1-1 bis 1-4:

[Formel 1-1]

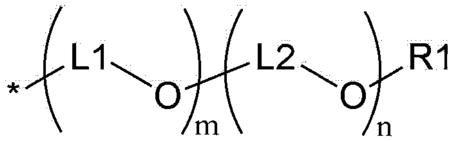

[Formel 1-2]

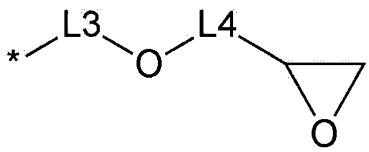

[Formel 1-3]

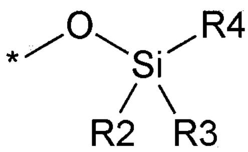

[Formel 1-4]

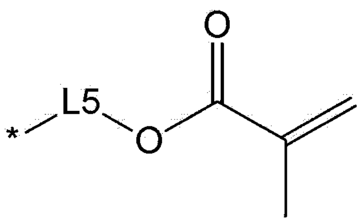

wobei

L1 bis L5 eine C1 bis C30 Alkylengruppe sind,
R1 bis R4 ausgewählt sind aus der Gruppe, bestehend aus Wasserstoff; einer Hydroxylgruppe; einer Aminogruppe; einer Thiolgruppe; einer C1 bis C30 Alkylgruppe; einer C2 bis C30 Alkenylgruppe; einer C2 bis C30 Alkynylgruppe; einer C1 bis C30 Alkoxygruppe; und einer C1 bis C30 Carboxylgruppe,
m und n gleich oder verschieden voneinander sind und jeweils unabhängig eine ganze Zahl von 0 bis 10 sind, und
* eine Bindungsposition ist;
wobei das Gewichtsgehaltsverhältnis des Polymers und des polyedrischen oligomeren Flüssigphasen-Silsesquioxans 1:1 bis 1:4 beträgt; und
das Gewichtsgehaltsverhältnis des polyedrischen oligomeren Flüssigphasen-Silsesquioxans und des Lithiumsalzes 10:1 bis 2:1 beträgt.

**2.** Festphasen-Flüssigphasen-Hybridelektrolytmembran nach Anspruch 1, wobei in Formel 1-1 bis 1-4

L1 bis L5 eine C1 bis C10 Alkylengruppe sind,
R1 bis R4 Wasserstoff; Hydroxylgruppe; oder eine C1 bis C30 Alkylgruppe sind, und
m und n gleich oder verschieden voneinander sind und jeweils unabhängig eine ganze Zahl von 0 bis 10 sind.

**3.** Festphasen-Flüssigphasen-Hybridelektrolytmembran nach Anspruch 1, wobei R ausgewählt ist aus der Gruppe, bestehend aus einer Polyethylenglycolgruppe, einer Glycidylgruppe, einer Dimethylsilyloxygruppe und einer Methacrylgruppe.

**4.** Festphasen-Flüssigphasen-Hybridelektrolytmembran nach Anspruch 1, wobei das Lithiumsalz mindestens eines umfasst, ausgewählt aus der Gruppe, bestehend aus $LiPF_6$, $LiBF_4$, $LiSbF_6$, $LiAsF_6$, LiOH, $LiOH{\cdot}H_2O$, LiBOB, $LiClO_4$, $LiN(C_2F_5SO_2)_2$, $LiN(CF_3SO_2)_2$, $CF_3SO_3Li$, $LiC(CF_3SO_2)_3$, $LiC_4BO_8$, LiFSI, $LiClO_4$ und einer Kombination davon.

**5.** Festphasen-Flüssigphasen-Hybridelektrolytmembran nach Anspruch 1, wobei die Ionenleitfähigkeit der Festphasen-Flüssigphasen-Hybridelektrolytmembran $1{,}0 \times 10^{-7}$ bis $9{,}0 \times 10^{-5}$ S/cm bei 25°C beträgt, gemessen wie in der Beschreibung dargelegt.

**6.** Festphasen-Flüssigphasen-Hybridelektrolytmembran nach Anspruch 1, wobei eine Dicke der Festphasen-Flüssigphasen-Hybridelektrolytmembran 1 bis 200 μm beträgt.

**7.** Lithiumsekundärbatterie, umfassend eine positive Elektrode; eine negative Elektrode; und die Festphasen-Flüssigphasen-Hybridelektrolytmembran nach einem der Ansprüche 1 bis 6.

## Revendications

**1.** Membrane électrolytique hybride phase solide-phase liquide, comprenant un polymère ; un silsesquioxane oligomère polyédrique en phase liquide (POSS) représenté par la Formule 1 ci-dessous ; et un sel de lithium,

dans laquelle le polymère est sélectionné dans le groupe constitué de carbonate de polypropylène (PPC) et polyvinylpyrrolidone (PVP) étant une chaîne principale ou une chaîne latérale :

[Formule 1]

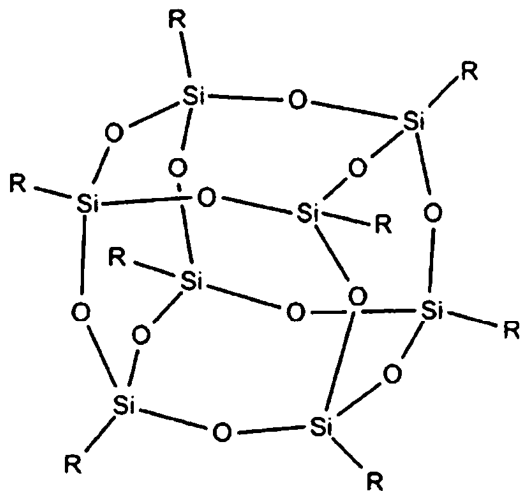

dans laquelle,
les R sont identiques ou différents les uns des autres, et sont chacun indépendamment sélectionnés dans le groupe constitué de groupes représentés par les Formules 1-1 à 1-4 :

[Formule 1-1]

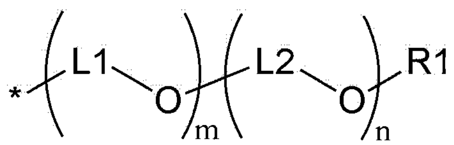

[Formule 1-2]

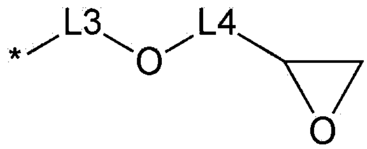

[Formule 1-3]

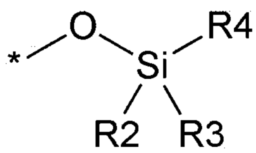

[Formule 1-4]

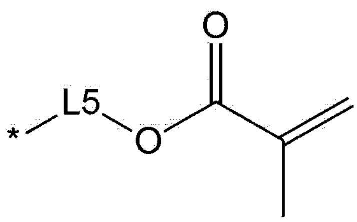

dans laquelle,

L1 à L5 sont un groupe alkylène en C1 à C30,
R1 à R4 sont sélectionnés dans le groupe constitué d'un hydrogène ; un groupe hydroxyle ; un groupe amino ; un groupe thiol ; un groupe alkyle en C1 à C30 ; un groupe alkényle en C2 à C30 ; un groupe alkynyle en C2 à C30 ; un groupe alkoxy en C1 à C30 ; et un groupe carboxyle en C1 à C30,
m et n sont identiques ou différents les uns des autres, et sont chacun indépendamment un nombre entier de 0 à 10, et
* est une position de liaison ;
dans laquelle le rapport de teneur en poids du polymère et du silsesquioxane oligomère polyédrique en phase liquide est 1:1 à 1:4 ; et
le rapport de teneur en poids du silsesquioxane oligomère polyédrique en phase liquide et du sel de lithium est 10:1 à 2:1.

**2.** Membrane électrolytique hybride phase solide-phase liquide selon la revendication 1, dans laquelle dans les Formules 1-1 à 1-4,

L1 à L5 sont un groupe alkylène en C1 à C10,
R1 à R4 sont un hydrogène ; un groupe hydroxyle ; ou un groupe alkyle en C1 à C30, et
m et n sont identiques ou différents les uns des autres, et sont chacun indépendamment un nombre entier de 0 à 10.

**3.** Membrane électrolytique hybride phase solide-phase liquide selon la revendication 1, dans laquelle R est sélectionné dans le groupe constitué d'un groupe polyéthylène glycol, un groupe glycidyle, un groupe diméthyle silyloxy et un groupe méthacrylique.

**4.** Membrane électrolytique hybride phase solide-phase liquide selon la revendication 1, dans laquelle le sel de lithium comprend un ou plusieurs éléments sélectionnés dans le groupe constitué de $LiPF_6$, $LiBF_4$, $LiSbF_6$, $LiAsF_6$, LiOH, $LiOH \cdot H_2O$, LiBOB, $LiClO_4$, $LiN(C_2F_5SO_2)_2$, $LiN(CF_3SO_2)_2$, $CF_3SO_3Li$, $LiC(CF_3SO_2)_3$, $LiC_4BO_8$, LiFSI, $LiClO_4$, et une combinaison de ces derniers.

**5.** Membrane électrolytique hybride phase solide-phase liquide selon la revendication 1, dans laquelle la conductivité ionique de la membrane électrolytique hybride phase solide-phase liquide est 1,0 x $10^{-7}$ à 9,0 x $10^{-5}$ S/cm à 25°C, mesurée comme décrit dans la description.

**6.** Membrane électrolytique hybride phase solide-phase liquide selon la revendication 1, dans laquelle une épaisseur de la membrane électrolytique hybride phase solide-phase liquide est 1 à 200 $\mu$m.

**7.** Batterie rechargeable au lithium comprenant une électrode positive ; une électrode négative ; et la membrane électrolytique hybride phase solide-phase liquide selon l'une quelconque des revendications 1 à 6.

【Figure 1】

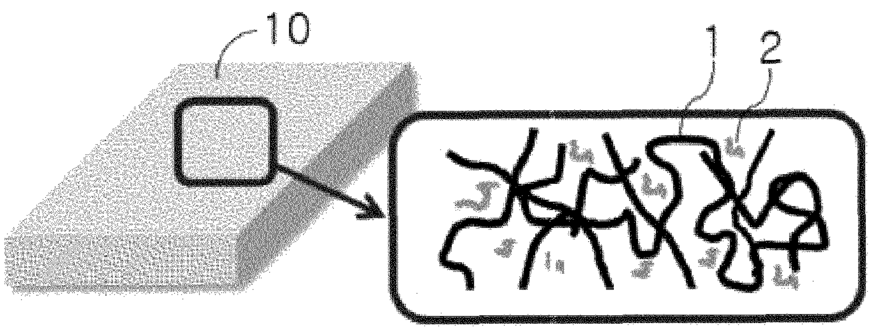

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020210155865
- KR 20030097009
- US 2015244025 A1